# EUROPÄISCHE PATENTSCHRIFT

(11) **EP 3 002 143 B1**
(45) Veröffentlichungstag und Bekanntmachung des Hinweises auf die Patenterteilung: **02.01.2019**
(21) Anmeldenummer: 15183239.1
(22) Anmeldetag: 01.09.2015
(51) Int. Cl.: B60J 5/06

(54) **SEITENABDECKUNG EINES NUTZFAHRZEUGAUFBAUS**
SIDE COVERING OF A COMMERCIAL VEHICLE STRUCTURE
RECOUVREMENT LATERAL D'UN CHASSIS DE VEHICULE UTILITAIRE

(30) Priorität: 08.09.2014 DE 102014112903
(43) Veröffentlichungstag der Anmeldung: 06.04.2016
(73) Patentinhaber: F. Hesterberg & Söhne GmbH & Co. KG, 58256 Ennepetal (DE)
(72) Erfinder: Tiedtke, Henning, 58256 Ennepetal (DE)
(74) Vertreter: Bungartz Christophersen Partnerschaft mbB Patentanwälte

(56) Entgegenhaltungen:
- CH-A5- 579 997
- DE-A1- 3 119 363
- DE-B- 1 136 904
- FR-A1- 2 595 304

## Beschreibung

Die Erfindung betrifft eine Seitenabdeckung eines Nutzfahrzeugaufbaus, mit einer Plane, die in einer über Rungen abgestützten Dachkonstruktion des Nutzfahrzeugaufbaus längsverschieblich aufgehängt ist, und mit einem in Höhe eines Ladebodens des Nutzfahrzeugaufbaus fahrzeugfest angeordneten, sich in Längsrichtung des Nutzfahrzeugaufbaus erstreckenden Profil, an dem mindestens ein Längsabschnitt eines unteren Randes der Plane gegenüber vertikalen Zugkräften festlegbar ist, wobei zum Festlegen des unteren Randes der Plane eine Befestigungsvorrichtung an dem unteren Rand der Plane angeordnet ist.

Derartige Nutzfahrzeugaufbauten sind weit verbreitet. Zum seitlichen Be- und Entladen auch großer Stückgüter lassen sich die an den Fahrzeuglängsseiten angeordneten Rungen, nachdem die zwischen den Rungen angeordneten Planlatten entfernt wurden, entriegeln und dann in Längsrichtung beiseiteschieben. Auf diese Weise ergibt sich für das Be- oder Entladen eine nahezu über die ganze Aufbaulänge reichende Öffnung. Vor Antritt der Fahrt sind die einzelnen Rungen zunächst wieder zu verriegeln, bevor die horizontalen Planlatten mit ihren beiden Enden wieder an den Rungen befestigt werden. Die Planlatten dienen dazu, die Kräfte im Falle eines seitlichen Verrutschens der Ladung aufzufangen, was die Seitenplane alleine nicht leisten kann. Erst dann wird die während des Beladens auf kurzer Länge zusammengeraffte Plane zugezogen, und von einem ihrer beiden Enden her oder auch zugleich von beiden Enden her horizontal gespannt. Schließlich wird in einem weiteren Schritt der untere Rand der Plane abschnittsweise am Nutzfahrzeugaufbau fixiert. Dies erfolgt üblicherweise mittels vieler einzelner Befestigungsvorrichtungen in Form von Spanngurten, deren oberes Ende jeweils am unteren Rand der Plane befestigt ist, und deren unteres Ende gegen ein in Höhe des Ladebodens des Nutzfahrzeugaufbaus fahrzeugfest angeordnetes Profil befestigt werden muss.

Durch diese beim Verschließen der Seitenabdeckung des Nutzfahrzeugaufbaus durchzuführenden Schritte und beim Öffnen der Seitenabdeckung des Nutzfahrzeugaufbaus in umgekehrter Reihenfolge durchzuführenden Schritte ist der Zeitaufwand vor und nach dem eigentlichen Beladen und Entladen groß.

Aus der DE 299 19 863 U1 ist ein Direktspanner zum erleichterten Festlegen des unteren Randes der Seitenplane bekannt. Dieser ist nicht an Spanngurten befestigt, sondern er ist mittels Nietverbindungen direkt auf der Außenseite der Seitenplane befestigt. Jeder Direktspanner besteht neben dem direkt an der Plane befestigten Aufnahmeelement aus einem daran um eine in Fahrzeuglängsrichtung angeordnete Achse schwenkbaren Hebel, und aus einem gelenkig in dem Hebel angeordneten Haken, welcher sich von unten her an einem fahrzeugfesten Profilschenkel einhaken lässt. Durch anschließendes Schwenken des Hebels kommt es zu einem nach unten gerichteten Zug an der Plane. Die Bedienung erfordert ein beidhändiges Arbeiten, da zugleich der Haken gegen den Profilschenkel geführt, und der Hebel durch eine nach oben gerichtete Bewegung geschwenkt werden muss.

Aus der DE 299 19 863 U1 ist ein Direktspanner zum erleichterten Festlegen des unteren Randes der Seitenplane bekannt. Dieser ist nicht an Spanngurten befestigt, sondern er ist mittels Nietverbindungen direkt auf der Außenseite der Seitenplane befestigt. Jeder Direktspanner besteht neben dem direkt an der Plane befestigten Aufnahmeelement aus einem daran um eine in Fahrzeuglängsrichtung angeordnete Achse schwenkbaren Hebel, und aus einem gelenkig in dem Hebel angeordneten Haken, welcher sich von unten her an einem fahrzeugfesten Profilschenkel einhaken lässt. Durch anschließendes Schwenken des Hebels kommt es zu einem nach unten gerichteten Zug an der Plane. Die Bedienung erfordert ein beidhändiges Arbeiten, da zugleich der Haken gegen den Profilschenkel geführt, und der Hebel durch eine nach oben gerichtete Bewegung geschwenkt werden muss.

Ziel der Erfindung ist es, durch konstruktive Mittel den Zeitaufwand vor und nach dem eigentlichen Be- und Entladevorgang gering zu halten, insbesondere den Aufwand für das erforderliche Öffnen und Verschließen der Seitenabdeckung des Nutzfahrzeugaufbaus.

Zur **Lösung** dieser Aufgabe wird für eine Seitenabdeckung eines Nutzfahrzeugaufbaus mit den Merkmalen des Anspruchs 1 vorgeschlagen.

Mittels einer derartigen Seitenabdeckung, durch die eine Verriegelung und gleichzeitig ein vertikales Verspannen der Plane erzielt wird, kann eine Reduzierung des Aufwands zum Öffnen und Schließen der Seitenabdeckung des Nutzfahrzeugaufbaus erreicht werden. Hierfür sind an dem unteren Rand der Plane mehrere beabstandet zueinander angeordnete Befestigungsvorrichtungen angeordnet, wobei jede Befestigungsvorrichtung jeweils ein Aufnahmeelement und ein unmittelbar an dem Aufnahmeelement auf einer Drehachse gelagertes Eingriffselement aufweist. Das Eingriffselement ist daher zu dem Aufnahmeelement verdrehbar, wodurch sich die Befestigungsvorrichtung schnell und einfach bedienen lässt, unter Umständen auch einhändig. Das Eingriffselement ist in dem an dem Ladeboden des Nutzfahrzeugaufbaus angeordneten Profil drehbar, indem es zwischen einer in dem Profil verriegelten Position und einer nicht in dem Profil verriegelten Position überführt werden kann, wobei in der verriegelten Position gleichzeitig die mit der Befestigungsvorrichtung verbundene Plane in einen vertikal gespannten Zustand überführt ist, hingegen in der nicht verriegelten Position die Plane ungespannt ist.

In dem gespannten Zustand der Plane ist die Plane gegenüber vertikalen Zugkräften festgelegt, so dass die Plane nicht nach oben gezogen werden kann, sei dies durch starke Seitenwindkräfte oder durch von innen her auf die Plane wirkende Kräfte, infolge einer nicht ausreichend gesicherten und daher sich verschiebenden Ladung. Auf die bisher erforderlichen Planlatten kann verzichtet werden.

Um die Plane längs ihres unteren Randes ausreichend zu befestigen, können die mehreren Befestigungsvorrichtungen in Abständen von etwa 50 - 70 cm zueinander angeordnet, d. h. an der Plane befestigt sein. Da die Plane durch die entsprechenden Abstände zwischen den einzelnen Befestigungsvorrichtungen uneingeschränkt verformbar bleibt, wird das Zusammenschieben bzw. Zusammenraffen der Plane durch die an der Plane angeordneten Befestigungsvorrichtungen nicht behindert.

Die Verriegelung der Befestigungsvorrichtung an dem fahrzeugfesten Profil und damit das Spannen der Plane ist für einen Benutzer, der die Seitenabdeckung manuell öffnen bzw. verschließen soll, einfach. Die Befestigungsvorrichtung kann vor oder während des Verschiebens der Plane in das Profil eingeführt werden, indem nur das Eingriffselement der Befestigungsvorrichtung in das Profil eingreift. Sobald die Plane ausreichend weit in Fahrzeuglängsrichtung verschoben ist, um den Nutzfahrzeugaufbau zu Verschließen bzw. Abzudecken, wird das Eingriffselement durch eine einfache Dreh- oder Schwenkbewegung gedreht, wobei es in dem Profil verhakt bzw. verriegelt, und die Plane dabei von einem ungespannten Zustand in einen gespannten Zustand, bei welchem die Plane in vertikaler Richtung gespannt ist, gelangt.

Das Lösen erfolgt umgekehrt, indem die Plane zunächst durch eine Drehbewegung des Eingriffselements innerhalb des Profils in den ungespannten Zustand überführt wird, und damit auch die Verriegelung des Eingriffselements bzw. der Befestigungsvorrichtung in dem Profil gelöst wird. Anschließend kann das Eingriffselement entweder aus dem Profil nach außen entfernt werden, oder in dem Profil verbleibend zusammen mit der Plane in Längsrichtung des Nutzfahrzeugaufbaus verschoben werden, um die Seitenabdeckung des Nutzfahrzeugsaufbaus wieder zu öffnen.

Bevorzugte Ausgestaltungen der Seitenabdeckung sind in den Unteransprüchen angegeben.

Zum Verriegeln des Eingriffselements und damit der Befestigungsvorrichtung in dem Profil ist es bevorzugt vorgesehen, dass das Eingriffselement einen ersten Eingriffsabschnitt und einen dem ersten Eingriffsabschnitt in Bezug auf die Drehachse gegenüberliegenden zweiten Eingriffsabschnitt aufweist, wobei im gespannten Zustand der Plane der erste Eingriffsabschnitt und der zweite Eingriffsabschnitt Profilränder des Profils hintergreifen. Das Eingriffselement weist über die zwei Eingriffsabschnitte somit zwei Bereiche auf, mittels welchen das Eingriffselement in dem Profil verhaken und damit verriegeln kann, so dass eine besonders sichere Fixierung des Eingriffselements in dem Profil erreicht werden kann.

Das Profil ist vorzugsweise C-förmig ausgebildet mit einem oberen Rand und einem unteren Rand, so dass das Eingriffselement im gespannten Zustand der Plane mit seinem ersten Eingriffsabschnitt den oberen Rand hintergreifen bzw. untergreifen kann und mit seinem zweiten Eingriffsabschnitt den unteren Rand hintergreifen bzw. untergreifen kann.

Das Aufnahmeelement ist fest mit der Plane verbunden und das Aufnahmeelement ist vorzugsweise bei der Drehbewegung des Eingriffselements vertikal zu dem sich in Längsrichtung des Nutzfahrzeugaufbaus erstreckenden Profil bewegbar. Fest verbunden bedeutet hierbei, dass das Aufnahmeelement in einer festen Position an der Plane befestigt ist und damit nicht relativ zu der Plane bewegbar ist. Mit dem Eingriffselement ist das Aufnahmeelement vorzugsweise derart gekoppelt, dass bei der Drehbewegung des Eingriffselements auch das Aufnahmeelement relativ zu dem fahrzeugfest angeordneten Profil bewegbar ist, wobei durch die feste Verbindung des Aufnahmeelements mit der Plane dabei auch die Plane relativ zu dem fahrzeugfest angeordneten Profil bewegbar ist. Die Bewegung des Aufnahmeelements ist quer zu dem sich in Längsrichtung des Nutzfahrzeugaufbaus erstreckenden Profil, wobei durch diese Querbewegung eine Überführung der Plane in den gespannten Zustand und den ungespannten Zustand in einfacher Art und Weise ermöglicht werden kann.

Zum Erreichen einer guten Abstützung des Aufnahmeelements an der Plane weist das Aufnahmeelement vorzugsweise eine erste Platte und eine zweite Platte auf, wobei die erste Platte an der Innenseite der Plane flächig anliegend angeordnet ist und wobei die zweite Platte an der Außenseite der Plane flächig anliegend angeordnet ist. Die Plane ist also zwischen den beiden Platten angeordnet. Dadurch können die auf die Plane wirkenden Kräfte, insbesondere beim Spannen der Plane, gleichmäßig auf die beiden Plattenelemente verteilt werden, so dass eine Beschädigung der Plane durch das Aufnahmeelement verhindert werden kann. Die Platten können vollflächig oder nur rahmenförmig ausgebildet sein. Ferner können die Platten verschiedenartige Formen, wie beispielsweise mehreckig, rund oder oval aufweisen.

Bevorzugt sind an der Stelle, wo das Aufnahmeelement an der Plane befestigt ist, auch die beiden Platten miteinander verbunden. Die erste Platte und die zweite Platte sind miteinander und mit der Plane z. B. über eine Schraubverbindung oder eine Nietverbindung verbunden. Die Schraubverbindung oder Nietverbindung kann dann sowohl durch die beiden Platten als auch durch die Plane hindurchgeführt sein, so dass keine gesonderte Befestigungsstelle für die Plane an dem Aufnahmeelement bzw. an den Platten des Aufnahmeelements vorgesehen werden muss.

Um die Drehbarkeit des Eingriffselements für einen Benutzer zu erleichtern, ist das Eingriffselement bevorzugt mittels eines an dem Eingriffselement befestigten Griffelements drehbar. Das Griffelement ist über die Drehachse drehfest mit dem Eingriffselement verbunden, so dass bei einer Drehbewegung des Griffelements auch das Eingriffselement dreht. Das Griffelement kann lösbar oder unlösbar mit dem Eingriffselement verbunden sein. Eine Ausgestaltung des Griffelements kann in Form eines Hebels sein. Andere Ausgestaltungen des Griffelements für eine einhändige Bedienung sind jedoch ebenfalls denkbar, z. B. ein Griffelement in Form eines Knebels.

Um die Handhabbarkeit für einen Benutzer zu erleichtern, insbesondere die Positionierung des Eingriffselements mittels des Griffelements sicher und kontrolliert ausführen zu können, ist es bevorzugt vorgesehen, dass das Griffelement in einer ersten Position, in welcher die Plane in dem ungespannten Zustand ist, und in mindestens einer zweiten Position, in welcher die Plane in dem gespannten Zustand ist, arretierbar ist. Dadurch ist es für einen Benutzer bereits optisch leicht erkennbar, ob das Eingriffselement in dem Profil verriegelt ist oder nicht, wodurch auch der Zustand der Plane für den Benutzer leicht kontrollierbar ist. Zudem wird durch die Arretierung ein ungewolltes Schwenken des Griffelements verhindert. Weiter kann vorgesehen sein, dass das Griffelement in mindestens einer zwischen der ersten Position und der zweiten Position ausgebildeten Zwischenposition verrastbar ist. Durch die Verrastung des Griffelements in einer oder mehreren Zwischenpositionen kann die auf die Plane wirkende Spannung gezielt eingestellt werden.

Die Verrastung des Griffelements kann mittels eines an dem Griffelement ausgebildeten Rastelements und zwei oder mehr an dem Aufnahmeelement ausgebildeten Gegenrastelementen ausgebildet sein. Beispielsweise kann das Rastelement in Form eines Zapfens ausgebildet sein und die Gegenrastelemente können dann in Form von an dem Aufnahmeelement ausgebildeten Öffnungen, in welche der Zapfen einhaken kann, ausgebildet sein. Alternativ ist es auch möglich, dass das Rastelement in Form einer Öffnung ausgebildet ist und die Gegenrastelemente in Form von an dem Aufnahmeelement ausgebildeten Zapfen ausgebildet sind. Andere Ausgestaltungen des Rastelements und der Gegenrastelemente sind ebenfalls denkbar.

Ist das Aufnahmeelement aus zwei Platten ausgebildet, so sind die Gegenrastelemente vorzugsweise an einer nach außen, von der Plane wegweisenden Seitenfläche der äußeren Platte ausgebildet, so dass die Gegenrastelemente für einen Benutzer leicht erkennbar sind und damit die Handhabung der Befestigungsvorrichtung für den Benutzer erleichtert werden kann.

Weitere Einzelheiten sowie Vorteile ergeben sich aus der nachfolgenden Beschreibung eines Ausführungsbeispiels, wobei auf die Zeichnungen Bezug genommen wird. Darin zeigen:
- Fig. 1: eine Seitenansicht auf ein Nutzfahrzeug in der Bauart eines Sattelaufliegers mit einer Seitenabdeckung;
- Fig. 2: eine Detaildarstellung einer an dem unteren Rand einer Plane der Seitenabdeckung angeordneten Befestigungsanordnung und eines sich in Längsrichtung des Nutzfahrzeugsaufbaus erstreckenden Profils;
- Fig. 3: einen Querschnitt in Höhe des Ladebodens entsprechend der vertikalen Schnittebene III-III in Fig. 2;
- Fig. 4: eine Ansicht nur eines Profils und eines darin geführten Eingriffselements der Befestigungsanordnung.

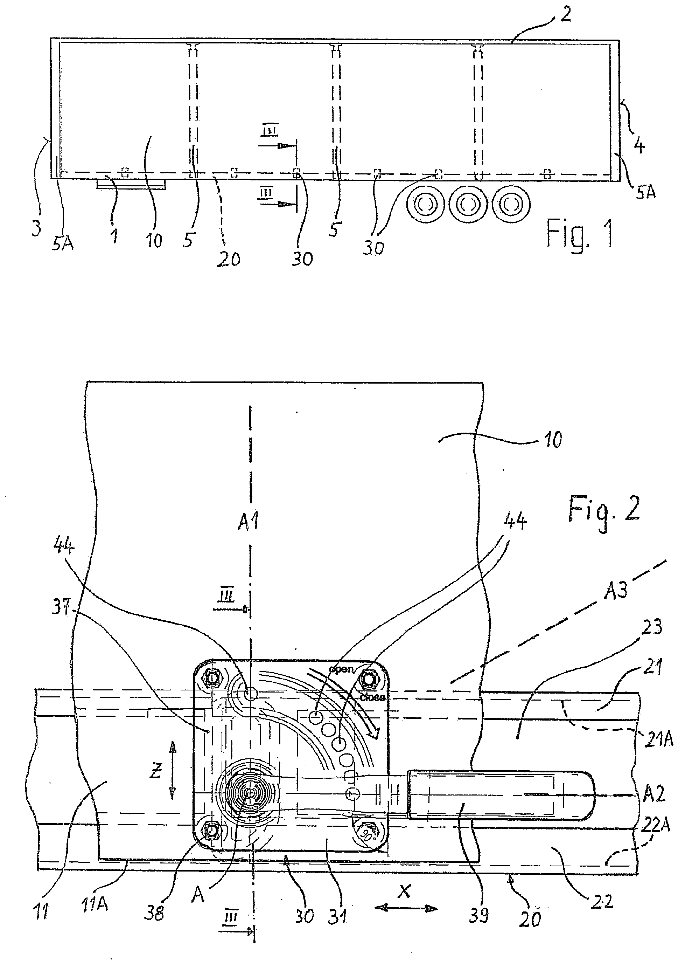

Zur Erläuterung der erfindungsgemäßen Seitenabdeckung für einen Nutzfahrzeugaufbau zeigt Fig. 1 ein Nutzfahrzeug in Gestalt eines Sattelaufliegers. Dessen Aufbau weist im Wesentlichen einen oberhalb des Fahrzeugchassis angeordneten Ladeboden 1, eine Dachkonstruktion 2, eine Vorderwand 3, eine Rückwand 4 sowie eine linke und eine rechte Seitenabdeckung auf. Jede Seitenabdeckung weist eine Plane 10, insbesondere Seitenplane, und mehrere vertikal verlaufende Rungen 5, 5A auf.

Die Plane 10 ist aus einem biegsamen Material, beispielsweise einem beschichteten Gewebe, ausgebildet. Durch zusätzliche Gewebebänder, die in horizontaler und/oder vertikaler Richtung mit dem Material der Plane 10 verbunden sein können, kann die Plane 10 zusätzlich verstärkt werden, damit sie auch großen seitlichen Belastungen widerstehen kann.

Sowohl die Rungen 5, als auch die Plane 10 erstrecken sich über die Höhe des Nutzfahrzeugaufbaus. Sie erstrecken sich insbesondere von der Höhe des Ladebodens 1, den die Plane 10 nach außen hin abdeckt, bis zu der von der Vorderwand 3, der Rückwand 4 und den Rungen 5, 5A getragenen Dachkonstruktion 2.

Bei den Rungen sind Eckrungen 5A, die sich in den vier Ecken des Fahrzeugaufbaus befinden, von den übrigen Rungen 5 zu unterscheiden. Nur die Rungen 5 sind in Längsrichtung X des Nutzfahrzeugsaufbaus verschiebbar angeordnet. Jede dieser Rungen 5 weist einen Rungengrundkörper und einen das obere Ende der Runge 5 bildenden Rollapparat auf. An dem Rollapparat sind zwei oder mehr Rollen frei drehbar gelagert, die in einer Schiene in der Dachkonstruktion 2 laufen. Mittels des Rollapparats geführt lässt sich daher die jeweilige Runge 5, in der Dachkonstruktion 2 hängend, in Längsrichtung X verschieben, um so die für das Be- und Entladen zur Verfügung stehende Öffnung zu vergrößern.

Das untere Ende jeder Runge 5 wird, soweit keine Belade- oder Entladetätigkeit stattfindet, gegenüber dem Ladeboden 1 verriegelt. Zur formschlüssigen Verriegelung der Rungen 5 ist seitlich an dem Ladeboden 1 jeweils ein entsprechender Rungenhalter befestigt. Jede Runge 5 ist mit einem Verriegelungsmechanismus versehen. Dieser erlaubt das formschlüssige Verbinden der Runge 5 mit dem fahrzeugfesten Rungenhalter bzw. umgekehrt das Lösen der Runge 5. In entriegeltem Zustand lässt sich die dann nur an ihrem Rollapparat hängende Runge 5 zunächst etwas nach außen von dem Ladeboden 1 weg schwenken, so dass sie sich von ihrem Rungenhalter löst. Anschließend lässt sich die Runge 5, an ihrem Rollapparat hängend, beliebig in Längsrichtung X verschieben.

Nach außen hin werden die Rungen 5 durch die Plane 10 verdeckt. Auch die Plane 10 lässt sich für Belade- und Entladetätigkeiten zu ihrem einen Ende hin zusammenschieben bzw. zusammenraffen. Die Plane 10 ist an ihrem oberen Rand in der Dachkonstruktion 2 aufgehängt, vorzugsweise über am oberen Rand der Plane 10 befestigte Röllchen, die in einer entsprechenden Führung in der Dachkonstruktion 2 gleiten können. Beim Zusammenschieben der Plane 10 legen sich die zwischen den Röllchen befindlichen Längsabschnitte des oberen Randes der Plane 10 wechselweise in Falten, so dass sich die gesamte Plane 10 platzsparend am vorderen oder am hinteren Ende des Nutzfahrzeugaufbaus zusammenschieben bzw. raffen lässt.

Bei geschlossener Seitenabdeckung ist es notwendig, auch den unteren Rand 11 der Plane 10, der sich etwa in Höhe des Ladebodens 1 befindet, ausreichend zu befestigen. Bestandteil des Ladebodens 1 sind an jeder Fahrzeugseite ein die Statik des Ladebodens 1 bestimmendes Ladebodenprofil sowie in das Ladebodenprofil eingesetzte Bodenbretter. An einer nach fahrzeugaußen weisenden Außenwand des Ladebodenprofils sind die einzelnen Rungenhalter für die Rungen 5 befestigt.

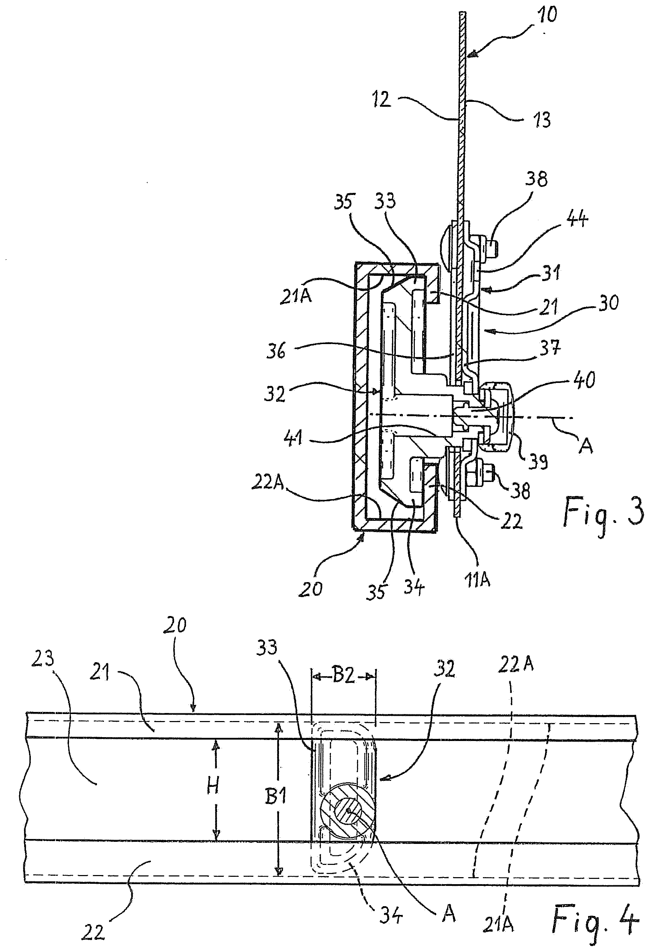

An derselben Außenwand des Ladebodenprofils ist außerdem ein zusätzliches Profil 20, wie es in den Fig. 2 - 4 gezeigt ist, in horizontaler Ausrichtung bzw. in Längsrichtung X fest angeordnet, z. B. durch Verschweißen mit dem Ladebodenprofil. Das Profil 20 weist eine nach außen offene C-Form auf, wie insbesondere in Fig. 3 zu erkennen ist.

Alternativ kann der durch die C-Form des Profils 20 erzielte Profilquerschnitt auch unmittelbar, also einstückig, an dem ohnehin vorhandenen Ladebodenprofil, welches die Statik des Ladebodens 1 bestimmt, ausgebildet sind. In diesem Fall sind das Ladebodenprofil und das Profil 20 auf jeder Fahrzeugseite zu einem einzigen Profilträger zusammengefasst.

Das sich in Längsrichtung X erstreckende C-Profil weist einen oberen, nach unten gerichteten Profilrand 21 und einen unteren, nach oben gerichteten Profilrand 22 auf, zwischen denen sich eine langgestreckte Öffnung 23 der vertikalen Höhe H befindet. Der obere Profilrand 21 begrenzt einen oberen Kanal mit nach unten weisender Kanalbasis 21A. Der untere Profilrand 22 begrenzt einen unteren Kanal mit nach oben weisender Kanalbasis 22A.

Zum Befestigen des unteren Randes 11 der Plane 10 sind in Längsrichtung X mehrere Befestigungsvorrichtungen 30 an der Plane 10 angeordnet, welche zum Befestigen der Plane 10 mit dem Profil 20 zusammenwirken. Bevorzugt sind die Befestigungsvorrichtungen 30 in einem Abstand von 50 - 70 cm entlang des unteren Randes 11 der Plane 10 angeordnet.

Detaildarstellungen der Befestigungsvorrichtung 30 sind in Fig. 2 - 4 gezeigt.

Jede Befestigungsvorrichtung 30 setzt sich, auf Seiten der Plane 10, aus einem mit der Plane 10 fest verbundenen Aufnahmeelement 31 und einem daran drehbar gelagerten Eingriffselement 32 zusammen. Die horizontale Drehachse A, auf der das Eingriffselement 32 direkt an dem Aufnahmeelement 31 drehgelagert ist, erstreckt sich quer zu der Fahrzeuglängsrichtung X. Das Eingriffselement 32 ist derart ausgebildet, dass es in das fahrzeugfest angeordnete Profil 20 eingreifen kann. Durch Drehen des Eingriffselements 32 um die Drehachse A gelangt das Eingriffselement 32 innerhalb des Profils 20 entweder in eine verriegelte Position, wie sie in den Fign. 2, 3 und 4 gezeigt ist, oder in eine nicht verriegelte Position.

In der verriegelten Position verriegelt das Eingriffselement 32 indem es in das Profil 20 einhakt, so dass das Eingriffselement 32 und damit die Befestigungsvorrichtung 30 fest mit dem Profil 20 verbunden ist, und sich nicht ungewollt nach außen aus dem Profil 20 lösen kann. In der nicht verriegelten Position ist das Eingriffselement 32 nicht in dem Profil 20 verhakt, so dass das Eingriffselement 32 aus dem Profil 20 nach außen entfernt werden kann und damit die gesamte Befestigungsvorrichtung 30 von dem Profil 20 gelöst werden kann.

Zum Verriegeln in dem Profil 20 weist das Eingriffselement 32 einerseits der quer zur Fahrzeuglängsrichtung X angeordneten Drehachse A einen ersten Eingriffsabschnitt 33, und andererseits dieser Drehachse A einen zweiten Eingriffsabschnitt 34 auf, wobei nur im verriegelten Zustand die Eingriffsabschnitte 33, 34 das Profil 20 hintergreifen.

Durch die Anordnung der zwei Profilränder 21, 22 kann das Eingriffselement 32 in der verriegelten Position mit seinem Eingriffsabschnitt 33 hinter den oberen Rand 21 greifen, und mit seinem anderen Eingriffsabschnitt 34 hinter den unteren Rand 22 greifen, wie insbesondere in Fig. 3 und 4 zu erkennen ist.

In nicht verriegeltem Zustand ist das Eingriffselement 32 derart gedreht, dass die beiden Eingriffsabschnitte 33, 34 nicht hinter die Profilränder 21, 22 greifen, und das Eingriffselement 32 daher durch die Öffnung 23 zwischen den Profilrändern 21, 22 hindurch nach außen aus dem Profil 20 herausbewegt werden kann.

Zur Überführung des Eingriffselements 32 zwischen der verriegelten und der nicht verriegelten Position ist dieses bei der hier gezeigten Ausgestaltung um 90° drehbar.

Das Eingriffselement 32 mit seinen Eingriffsabschnitten 33, 34 ist hinsichtlich Funktion und Arbeitsweise einem Exzenter vergleichbar. Seine größte Breite B1 ist deutlich größer, und seine geringste Breite B2 ist etwas geringer als die Höhe H der zwischen den zwei Profilrändern 21, 22 verbleibenden, langgestreckten Profilöffnung 23. Erreicht wird dies z. B. durch eine insgesamt ovale Form des Eingriffselements 32, jedoch kann dieses auch z. B. eine elliptische Kontur oder eine Nierenform aufweisen.

Die erwähnte größte Breite B1 des Eingriffselements 32 ist ungefähr gleich groß wie der vertikale Abstand zwischen der Kanalbasis 21A und der Kanalbasis 22A. In verriegelter Drehlage des Eingriffselements 32 stützt sich daher, nach Durchlaufen einer Exzenterbewegung, der erste Eingriffsabschnitt 33 von unten her an der Kanalbasis 21A ab, wodurch die Plane 10 nach unten hin gespannt wird. Zugleich liegt dann der zweite Eingriffsabschnitt 34 von oben an der anderen Kanalbasis 22A an. Dies führt zu dem zusätzlichen Vorteil, dass das Eingriffselement 32 in seiner verriegelten Drehlage kein oder nahezu kein vertikales Spiel in dem Profil 20 hat. Dadurch wird ein Hin- und Herschlagen der Plane 10 bei schneller Fahrt oder pulsierenden Seitenwinden unterbunden.

Zur Erzielung eines harmonischen Kraftaufbaus beim Verdrehen des Eingriffselements 32 sind an den Eingriffsabschnitten 33, 34 gerundete Exzenterkonturen zu bevorzugen. Außerdem können die dem Fahrzeug zugewandten Kanten der Eingriffsabschnitte 33, 34 mit Einführschrägen 35 versehen sein. Diese erleichtern das Einführen des Eingriffselements 32 von fahrzeugaußen her in die Profilöffnung 23, deren Höhe H vorzugsweise nur geringfügig größer ist, als die erwähnte geringste Breite B2 des Eingriffselements 32.

Durch die exzenterartige Kontur des Eingriffselements 32 relativ zu seiner Drehachse A kommt es beim Drehen des Eingriffselements 32 zu einer Verschiebung des Ortes der Drehachse A in vertikaler Richtung Z, so dass die Drehachse A innerhalb des Profils 20 vertikal nach oben bzw. nach unten wandert. Der so vertikal erzielbare Weg ist, bedingt durch den aus Festigkeitsgründen mindestens notwendigen Durchmesser der Drehachse A, in jedem Fall geringer, als die Höhe H der langgestreckten Öffnung 23.

Bei einer Überführung des Eingriffselements 32 von der nicht verriegelten Position in die verriegelte Position wandert der Ort der Drehachse A in Z-Richtung nach unten. Umgekehrt, bei einer Überführung des Eingriffselements 32 von der verriegelten Position in die nicht verriegelte Position, wandert der Ort der Drehachse A in Z-Richtung nach oben.

Durch die über die Drehachse A erzielte Drehkopplung von Aufnahmeelement 31 und Eingriffselement 32 kommt es bei einer Drehbewegung des Eingriffselements 32 auch gleichzeitig zu einer Verschiebebewegung des an der Plane 10 befestigten Aufnahmeelements 31 in vertikaler Richtung Z. Bei einer Bewegung des Drehpunkts des Eingriffselements nach oben wird auch das Aufnahmeelement 31 in Z-Richtung mit nach oben bewegt. Bei einer Bewegung des Drehpunkts nach unten wird auch das Aufnahmeelement 31 in Z-Richtung mit nach unten bewegt.

Das Aufnahmeelement 31 ist fest mit der Plane 10 im Bereich deren unteren Randes 11 verbunden, was bedeutet, dass zwischen der Plane 10 und dem Aufnahmeelement 31 keine Relativbewegung möglich ist. Hierdurch wird erreicht, dass mit der Verschiebebewegung des Aufnahmeelements 31 in vertikaler Richtung Z, aufgrund der Drehbewegung des Eingriffselements 32, die Plane 10 in einen gespannten Zustand, wie in Fig. 2, 3, und 4 gezeigt ist, oder in einen ungespannten Zustand.

Befindet sich also das drehbare Eingriffselement 32 in der verriegelten Position, ist die Plane 10 vertikal gespannt. Befindet sich das Eingriffselement 32 in der nicht verriegelten Position, ist die Plane 10 in einem ungespannten Zustand, so dass diese in Längsrichtung X des Nutzfahrzeugaufbaus verschoben werden kann.

Um eine hohe Stabilität der Verbindung der Plane 10 mit dem Aufnahmeelement 31 zu erzielen, besteht das Aufnahmeelement 31 gemäß Fig. 3 aus einer inneren ersten Platte 36 und einer äußeren zweiten Platte 37, wobei die erste Platte 36 an der Innenseite 12 der Plane 10 angeordnet ist, und die zweite Platte 37 gegenüberliegend an der Außenseite 13 der Plane 10 angeordnet ist.

Verbunden sind die zwei Platten 36, 37 über Schraubverbindungen 38, welche in den Ecken der Platten 36, 37 angeordnet sind, im Falle rechteckiger Platten in allen vier Ecken. Die Schraubverbindungen 38 sind durch die Platten 36, 37 und auch durch die flächig an beiden Platten anliegende Plane 10 hindurchgeführt, um die Plane 10 fest mit den beiden Platten 36, 37 und damit mit dem Aufnahmeelement 31 zu verbinden.

Als Drehachse A dient hier ein Bolzen 40, der durch Öffnungen in den Platten 36, 37 hindurchführt und darin drehgelagert ist. In diesem Bereich ist auch die Plane 10 mit einer geeigneten Öffnung für den Durchtritt der Drehachse A versehen, was den Vorteil hat, dass der untere Abschlussrand 11A der Plane 10 durchgehend ausgebildet sein kann. Dies reduziert die Kosten bei der Herstellung der Plane.

Um das Drehen des Eingriffselements 32 für einen Benutzer zu erleichtern, weist die Befestigungsvorrichtung 30 ein Griffelement 39 auf, welches mit dem Eingriffselement 32 drehfest verbunden ist. Das Griffelement 39, welches hier in Form eines Hebels ausgebildet ist, ist mit dem Eingriffselement 32 über den die Drehachse A bildenden Bolzen 40, und damit im Bereich der drehbaren Lagerung des Eingriffselements 32 verbunden.

Die Befestigung des Griffelements 39 an dem Eingriffselement 32 erfolgt über den zugleich die Drehachse A bildenden Bolzen 40, z. B. Schraubbolzen. Dieser ist durch das Griffelement 39 und die beiden Platten 36, 37 des Aufnahmeelements 31 hindurchgeführt und in eine an dem Eingriffselement 32 ausgebildete Gewindebohrung 41 eingeschraubt. Durch die drehfeste Verbindung des Griffelements 39 mit dem Eingriffselement 32 ist zwischen beiden keine Relativbewegung möglich.

Das Griffelement 39 ist für einen Benutzer gut greifbar, da es außen vor der zweiten, also äußeren Platte 37 des Aufnahmeelements 31 angeordnet ist. Daher ist das Griffelement 39 das am weitesten Fahrzeugaußen befindliche Bauteil der Befestigungsvorrichtung.

Ist das Eingriffselement 32 nicht in dem Profil 20 verriegelt, und daher die Plane 10 in einem ungespannten Zustand, weist das freie Ende des Griffelements 39 in der Drehlage A1 (Fig. 2) nach oben, ist also vertikal ausgerichtet. Zur Überführung des Eingriffselements 32 in die verriegelte Position wird das Griffelement 39 um 90° nach unten in die Drehlage A2 verschwenkt, und weist dann in etwa in Längsrichtung X des Nutzfahrzeugaufbaus.

Die Drehlage A3 des Griffelements 39 ist eine Zwischenposition zwischen der ersten und der zweiten Position.

Um das Griffelement 39 sicher in den einzelnen Positionen bzw. Drehlagen A1, A2, A3 zu arretieren, ist innen an dem Griffelement 39 ein Rastelement angeordnet. An der äußeren Platte 37 des Aufnahmeelements 31 sind mehrere Gegenrastelemente 44 ausgebildet.

Bei der hier gezeigten Ausgestaltung ist das Rastelement ein innen an dem Griffelement 39 angeordneter Zapfen. Die Gegenrastelemente 44 sind auf einer Kreisbogenbahn um die Drehachse A angeordnete Öffnungen, in welche das als Zapfen ausgebildete Rastelement jeweils eingreifen kann, um das Griffelement 39 in der entsprechenden Position zu arretieren.

### Bezugszeichenliste

- 1: Ladeboden
- 2: Dachkonstruktion
- 3: Vorderwand
- 4: Rückwand
- 5: Runge
- 5A: Eckrunge
- 10: Plane
- 11: unterer Rand der Plane
- 11A: Abschlussrand der Plane
- 12: Innenseite
- 13: Außenseite
- 20: Profil
- 21: oberer Profilrand
- 21A: Kanalbasis
- 22: unterer Profilrand
- 22A: Kanalbasis
- 23: Öffnung
- 30: Befestigungsvorrichtung
- 31: Aufnahmeelement
- 32: Eingriffselement
- 33: erster Eingriffsabschnitt
- 34: zweiter Eingriffsabschnitt
- 35: Einführschräge
- 36: erste bzw. innere Platte
- 37: zweite bzw. äußere Platte
- 38: Schraubverbindung
- 39: Griffelement
- 40: Bolzen
- 41: Gewindebohrung
- 44: Gegenrastelement

- A: Drehachse
- A1: Drehlage, entriegelt
- A2: Drehlage, verriegelt
- A3: weitere Drehlage
- B1: größte Breite
- B2: geringste Breite
- H: Höhe Öffnung
- X: Längsrichtung
- Z: vertikale Richtung

## Patentansprüche

1. Seitenabdeckung eines Nutzfahrzeugaufbaus, mit einer Plane (10), die in einer über Rungen (5, 5A) abgestützten Dachkonstruktion (2) des Nutzfahrzeugsaufbaus längsverschieblich aufgehängt ist, und mit einem in Höhe eines Ladebodens (1) des Nutzfahrzeugaufbaus fahrzeugfest angeordneten, sich in Längsrichtung (X) des Nutzfahrzeugsaufbaus erstreckenden Profil (20), an dem mindestens ein Längsabschnitt eines unteren Randes (11) der Plane (10) gegenüber vertikalen Zugkräften festlegbar ist, wobei zum Festlegen des unteren Randes (11) der Plane (10) eine Befestigungsvorrichtung (30) an dem unteren Rand (11) der Plane (10) angeordnet ist, **dadurch gekennzeichnet, dass** die Befestigungsvorrichtung (30) ein an der Plane (10) befestigtes Aufnahmeelement (31) und ein an dem Aufnahmeelement (31) auf einer sich horizontal und quer zur Längsrichtung (X) des Nutzfahrzeugaufbaus erstreckenden Drehachse (A) gelagertes Eingriffselement (32) aufweist, wobei das Eingriffselement (32) nach der Funktion eines Exzenters innerhalb des Profils (20) verdrehbar angeordnet ist, um die Plane (10) zwischen einem gespannten und einem ungespannten Zustand zu überführen.

2. Seitenabdeckung nach Anspruch 1, **dadurch gekennzeichnet, dass** das Eingriffselement (32) einen ersten Eingriffsabschnitt (33) und einen dem ersten Eingriffsabschnitt (33) in Bezug auf die Drehachse (A) gegenüberliegenden zweiten Eingriffsabschnitt (34) aufweist, wobei im gespannten Zustand der Plane (10) der erste Eingriffsabschnitt (33) und der zweite Eingriffsabschnitt (34) Profilränder (21, 22) des Profils (20) hintergreifen.

3. Seitenabdeckung nach einem der Ansprüche 1 bis 2, **dadurch gekennzeichnet, dass** das Profil (20) selbst oder ein Profilbereich des Profils (20) von C-förmigem, nach fahrzeugaußen hin offenem Querschnitt ist.

4. Seitenabdeckung nach einem der Ansprüche 1 bis 3, **dadurch gekennzeichnet, dass** das Aufnahmeelement (31) eine erste Platte (36) und eine zweite Platte (37) aufweist, wobei die erste Platte (36) an der Innenseite (12) der Plane (10) anliegend, und die zweite Platte (37) gegenüberliegend an der Außenseite (13) der Plane (10) anliegend angeordnet ist, und wobei die Platten (36, 37) miteinander verbunden sind, vorzugsweise über eine Schraubverbindung (38) oder eine Nietverbindung.

5. Seitenabdeckung nach Anspruch 4, **dadurch gekennzeichnet, dass** jede der Platten (36, 37) mit einer Öffnung für die Drehlagerung der mit dem Eingriffselement (32) fest verbundenen Drehachse (A) versehen ist.

6. Seitenabdeckung nach Anspruch 5, **dadurch gekennzeichnet, dass** die Plane (10) mit einer Öffnung versehen ist, durch die die Drehachse (A) hindurchgeführt ist.

7. Seitenabdeckung nach einem der Ansprüche 1 bis 6, **dadurch gekennzeichnet, dass** das Eingriffselement (32) mittels eines zu dem Eingriffselement (32) drehfesten Griffelements (39) drehbar ist, welches sich auf der Außenseite der Plane (10) befindet.

8. Seitenabdeckung nach Anspruch 7, **dadurch gekennzeichnet, dass** das Griffelement (39) in einer ersten Position, in welcher die Plane (10) ungespannt ist, und in mindestens einer zweiten Position, in welcher die Plane (10) gespannt ist, arretierbar ist.

9. Seitenabdeckung nach Anspruch 8, **dadurch gekennzeichnet, dass** die Arretierung des Griffelements (39) mittels eines an dem Griffelement (39) ausgebildeten Rastelements (42) und zwei oder mehr an dem Aufnahmeelement (31) ausgebildeten Gegenrastelementen (44) ausgebildet ist.

## Claims

1. Side covering of a commercial vehicle structure, with a tarpaulin (10) which is suspended in a longitudinally displaceable manner in a roof construction (2), which is supported via stanchions (5, 5A), of the commercial vehicle structure, and with a profile (20) which is arranged mounted on the vehicle level with a loading platform (1) of the commercial vehicle structure, extends in the longitudinal direction (X) of the commercial vehicle structure and on which at least one longitudinal portion of a lower edge (11) of the tarpaulin (10) can be secured in relation to vertical tensile forces, wherein, in order to secure the lower edge (11) of the tarpaulin (10), a fastening device (30) is arranged on the lower edge (11) of the tarpaulin (10), **characterized in that** the fastening device (30) has a receiving element (31) fastened to the tarpaulin (10) and an engagement element (32) which is mounted on the receiving element (31) on an axis of rotation (A) extending horizontally and transversely with respect to the longitudinal direction (X) of the commercial vehicle structure, wherein the engagement element (32) is arranged rotatably according to the function of an eccentric within the profile (20) in order to transfer the tarpaulin (10) between a tensioned and an untensioned state.

2. Side covering according to Claim 1, **characterized in that** the engagement element (32) has a first engagement portion (33) and a second engagement portion (34) lying opposite the first engagement portion (33) with respect to the axis of rotation (A), wherein, in the tensioned state of the tarpaulin (10), the first engagement portion (33) and the second engagement portion (34) grip behind profile edges (21, 22) of the profile (20).

3. Side covering according to either of Claims 1 and 2, **characterized in that** the profile (20) itself or a profile region of the profile (20) is of C-shaped cross section which is open towards the outside of the vehicle.

4. Side covering according to one of Claims 1 to 3, **characterized in that** the receiving element (31) has a first plate (36) and a second plate (37), wherein the first plate (36) is arranged lying against the inner side (12) of the tarpaulin (10), and the second plate (37) is arranged lying opposite against the outer side (13) of the tarpaulin (10), and wherein the plates (36, 37) are connected to each other, preferably via a screw connection (38) or a rivet connection.

5. Side covering according to Claim 4, **characterized in that** each of the plates (36, 37) is provided with an opening for the rotational mounting of the axis of rotation (A) which is fixedly connected to the engagement element (32).

6. Side covering according to Claim 5, **characterized in that** the tarpaulin (10) is provided with an opening through which the axis of rotation (A) is guided.

7. Side covering according to one of Claims 1 to 6, **characterized in that** the engagement element (32) is rotatable by means of a handle element (39) which is rotationally fixed to the engagement element (32) and is located on the outer side of the tarpaulin (10).

8. Side covering according to Claim 7, **characterized in that** the handle element (39) is lockable in a first position in which the tarpaulin (10) is untensioned, and in at least one second position in which the tarpaulin (10) is tensioned.

9. Side covering according to Claim 8, **characterized in that** the locking of the handle element (39) is formed by means of a latching element (42) formed on the handle element (39) and two or more mating latching elements (44) formed on the receiving element (31).

## Revendications

1. Recouvrement latéral d'une caisse de véhicule utilitaire, avec une bâche (10), qui est suspendue de façon déplaçable en longueur dans une structure de toit (2) de la caisse de véhicule utilitaire supportée au moyen de ridelles (5, 5A), et avec un profilé (20) disposé de façon fixée au véhicule à hauteur d'un plancher de chargement (1) de la caisse de véhicule utilitaire et s'étendant dans la direction longitudinale (X) de la caisse de véhicule utilitaire, auquel au moins une partie longitudinale d'un bord inférieur (11) de la bâche (10) peut être attachée par rapport à des forces de traction verticales, dans lequel un dispositif de fixation (30) est disposé sur le bord inférieur (11) de la bâche (10) pour attacher le bord inférieur (11) de la bâche (10), **caractérisé en ce que** le dispositif de fixation (30) présente un élément de réception (31) fixé à la bâche (10) et un élément d'accrochage (32) monté sur l'élément de réception (31) sur un axe de rotation (A) s'étendant horizontalement et transversalement à la direction longitudinale (X) de la caisse de véhicule utilitaire, dans lequel l'élément d'accrochage (32) est disposé de façon rotative selon la fonction d'un excentrique à l'intérieur du profilé (20), afin de transférer la bâche (10) entre un état tendu et un état non tendu.

2. Recouvrement latéral selon la revendication 1, **caractérisé en ce que** l'élément d'accrochage (32) présente une première partie d'accrochage (33) et une deuxième partie d'accrochage (34) opposée à la première partie d'accrochage (33) par rapport à l'axe de rotation (A), dans lequel dans l'état tendu de la bâche (10) la première partie d'accrochage (33) et la deuxième partie d'accrochage (34) s'accrochent derrière des bords profilés (21, 22) du profilé (20).

3. Recouvrement latéral selon une des revendications 1 et 2, **caractérisé en ce que** le profilé (20) lui-même ou une région profilée du profilé (20) présente une section transversale en forme de C, ouverte vers l'extérieur du véhicule.

4. Recouvrement latéral selon l'une quelconque des revendications 1 à 3, **caractérisé en ce que** l'élément de réception (31) présente une première plaque (36) et une seconde plaque (37), dans lequel la première plaque (36) est appliquée sur le côté intérieur (12) de la bâche (10) et la seconde plaque (37) est appliquée en face sur le côté extérieur (13) de la bâche (10), et dans lequel les plaques (36, 37) sont reliées l'une à l'autre, de préférence par un assemblage vissé (38) ou un assemblage rivé.

5. Recouvrement latéral selon la revendication 4, **caractérisé en ce que** chacune des plaques (36, 37) est dotée d'une ouverture pour l'appui rotatif de l'axe de rotation (A) solidaire de l'élément d'accrochage (32).

6. Recouvrement latéral selon la revendication 5, **caractérisé en ce que** la bâche (10) est dotée d'une ouverture, à travers laquelle l'axe de rotation (A) est mené.

7. Recouvrement latéral selon l'une quelconque des revendications 1 à 6, **caractérisé en ce que** l'élément d'accrochage (32) peut tourner au moyen d'un élément de saisie (39) solidaire en rotation de l'élément d'accrochage (32), qui se trouve sur le côté extérieur de la bâche (10).

8. Recouvrement latéral selon la revendication 7, **caractérisé en ce que** l'élément de saisie (39) peut être calé dans une première position, dans laquelle la bâche (10) n'est pas tendue, et dans au moins une deuxième position, dans laquelle la bâche (10) est tendue.

9. Recouvrement latéral selon la revendication 8, **caractérisé en ce que** le calage de l'élément de saisie (39) est réalisé au moyen d'un élément d'encliquetage (42) formé sur l'élément de saisie (39) et de deux ou plusieurs éléments d'encliquetage opposés (44) formés sur l'élément de réception (31).
